# EUROPÄISCHE PATENTSCHRIFT

(11) **EP 2 995 835 B1**
(45) Veröffentlichungstag und Bekanntmachung des Hinweises auf die Patenterteilung: **17.11.2021**
(21) Anmeldenummer: 15001327.4
(22) Anmeldetag: 05.05.2015
(51) Int. Cl.: F16H 61/02

(54) **VERFAHREN ZUR STEUERUNG EINES AUTOMATISCHEN SCHALTGETRIEBES UND STEUERGERÄT**
METHOD FOR CONTROLLING AN AUTOMATIC GEARBOX AND CONTROL DEVICE
PROCÉDÉ DE COMMANDE D'UNE BOÎTE DE VITESSES AUTOMATIQUE ET APPAREIL DE COMMANDE

(30) Priorität: 12.09.2014 DE 102014013286
(43) Veröffentlichungstag der Anmeldung: 16.03.2016
(73) Patentinhaber: MAN Truck & Bus SE, 80995 München (DE)
(72) Erfinder: Malischewski, Thomas, 91560 Heilsbronn (DE); Sommermann, Andreas, 91560 Heilsbronn (DE)
(74) Vertreter: Liebl, Thomas

(56) Entgegenhaltungen:
- WO-A1-2014/055017
- DE-A1-102008 054 802
- DE-A1-102012 012 499
- None

## Beschreibung

Die Erfindung betrifft ein Verfahren zur Steuerung eines Schaltvorgangs eines automatischen Schaltgetriebes bei einem Fahrzeug mit einer Brennkraftmaschine als Motor nach dem Oberbegriff des Anspruchs 1, ein Steuergerät zur Durchführung des Verfahrens sowie ein Fahrzeug.

Zur Entlastung eines Fahrers, insbesondere von großen Nutzfahrzeugen, ist es allgemein bekannt, diese mit einem automatischen Schaltgetriebe auszustatten. Dabei wird in Abhängigkeit diverser Parameter ein Ziel-Gang des Getriebes ermittelt und ein Schaltbefehl wird beim Erreichen vorgegebener Schaltbedingungen automatisch ausgeführt. Die Kriterien für einen solchen automatischen Schaltvorgang sind insbesondere ein möglichst kraftstoffeffizienter Betrieb des Fahrzeugs.

Bei einem bekannten Verfahren zur Steuerung eines Schaltvorgangs eines automatischen Schaltgetriebes bei einem Fahrzeug mit einer Brennkraftmaschine als Motor (DE 198 54 254 A1) ist in einem Steuergerät eine Schaltstrategie vorgegeben, bei der auf der Basis von aktuell erfassten fahrdynamischen und/oder fahrzeugspezifischen und/oder motorspezifischen Ist-Werten fortlaufend vorausschauend das Verhalten des Motors nach einem eventuellen Schaltvorgang in einen Ziel-Gang ermittelt wird. Als Ist-Werte zur Berechnung eines solchen Vorausschauergebnisses sind hier eine Motordrehzahl, eine Ausgangsdrehzahl des Getriebes, eine Fahrpedalstellung, eine Bremspedalstellung und eine Fahrgeschwindigkeit verwendet. Weiter können hier eine Gaspedalgeschwindigkeit, eine aktuelle Fahrzeugmasse und eine Fahrbahnsteigung berücksichtigt werden. Unter Einbeziehung dieser Vorschauergebnisse werden angepasste Schaltschwellen als Hochschaltschwellen oder Rückschaltschwellen, insbesondere für eine kraftstoffeffiziente Schaltung ermittelt und vorgegeben, wobei nach Überschreitung einer solchen Schaltschwelle ein Steuerbefehl für einen entsprechenden automatischen Schaltvorgang ausgegeben wird. Konkret werden als Schaltschwellen hier Grundgrenzdrehzahlbereiche festgelegt, welche hinsichtlich ihrer Grenzen verschiebbar und an die jeweiligen aktuellen Gegebenheiten anpassbar sind.

Ersichtlich hängt die Entscheidung, ob ein Schaltvorgang kraftstoffeffizient sein wird oder nicht und dadurch gegebenenfalls Kraftstoffeinsparungen realisiert werden können, davon ab, wie genau eine vorausschauende Ermittlung des Verhaltens des Motors, insbesondere eines Drehmomentaufbaus nach einem eventuellen Schaltvorgang in einen Ziel-Gang ermittelt werden kann.

Weiter ist ein Steuerverfahren für ein automatisches Schaltgetriebe bekannt (DE 10 2005 050 479 A1), bei dem ebenfalls vor einem Schaltvorgang vorausschauend das Verhalten des Motors hinsichtlich der voraussichtlichen Motordrehzahl nach einer Schaltung in einen Ziel-Gang berechnet wird. Diese berechnete Motordrehzahl wird mit einer Rückschaltschwelle verglichen und nur bei einem Überschreiten einer solchen Rückschaltschwelle wird eine automatische Hochschaltung in den Ziel-Gang realisiert. In einem ähnlichen bekannten Steuerungsverfahren (DE 601 02 962 T2) wird ebenfalls eine Vorausberechnung einer Motordrehzahl für einen möglichen Ziel-Gang durchgeführt und ein Hochschaltvorgang nur realisiert, wenn damit eine maximal zulässige Motordrehzahl nicht überschritten wird.

Die WO 2014/055017 A1 zeigt ein gattungsbildendes Verfahren, wobei die Temperatur in einem Abgasstrom durch Hochschalten in einen höheren Gang oder Herunterschalten in einen niedrigeren Gang gesteuert wird.

Aus der DE 10 2008 054 802 A1 ist ein Verfahren zur Steuerung eines automatisierten Stufenschaltgetriebes bekannt.

Demgegenüber ist es Aufgabe der Erfindung, ein Verfahren und ein Steuergerät zur Verfügung zu stellen, mit dem eine vorausschauende Berechnung als Sprungantwort des Motors bei einem automatischen Schaltvorgang in einen Ziel-Gang vergrößert werden kann.

Die Aufgabe der Erfindung wird gelöst mit den Merkmalen der unabhängigen Ansprüche. Vorteilhafte Ausgestaltungen sind Gegenstand der darauf rückbezogenen Unteransprüche.

Gemäß Anspruch 1 wird ein Verfahren vorgeschlagen, bei dem in einem Steuergerät eine Schaltstrategie vorgegeben ist, bei der auf der Basis von aktuell erfassten fahrdynamischen und/oder fahrzeugspezifischen und/oder motorspezifischen Ist-Werten fortlaufend vorausschauend das Verhalten des Motors nach einem eventuellen Schaltvorgang in einen Ziel-Gang ermittelt wird, wobei unter Einbeziehung dieser Vorschauergebnisse angepasste Schaltschwellen als Hochschaltschwellen oder Rückschaltschwellen, insbesondere für eine kraftstoffeffiziente Schaltung, ermittelt und vorgegeben werden, wobei nach Überschreiten einer Schaltschwelle ein Steuerbefehl für einen entsprechenden automatischen Schaltvorgang ausgegeben wird. Erfindungsgemäß ist vorgesehen, dass bei der Vorgabe einer angepassten Schaltschwelle die aktuelle Temperatur zumindest eines Bauteils der Motorabgasanlage mit berücksichtigt wird. Der aktuelle thermische Zustand der Motorabgasanlage, zum Beispiel der thermische Zustand einer Abgasturbine eines Turboladers, beeinflusst maßgeblich die Sprungantwort des Motors bei einem Schaltvorgang. Wenn ein solcher thermischer Zustand bei der vorausschauenden Berechnung des Verhaltens des Motors nach einem Schaltvorgang in einen Ziel-Gang berücksichtigt wird, ist das Vorausschauergebnis genauer und damit eine Entscheidung für einen kraftstoffeffizienten Schaltvorgang vorteilhaft präziser durchführbar.

Der relevante thermische Zustand wird, wie bereits zuvor erwähnt, bevorzugt bezüglich einer Abgasturbine eines Abgasturboladers bestimmt, kann aber auch alternativ oder zusätzlich auf einen Abgaskrümmer bezogen sein.

In einer konkreten Ausführungsform kann die relevante Temperatur eines Abgasanlagenbauteils direkt mittels eines oder mehrerer Temperatursensoren gemessen werden, wobei dann ein aktuelles Temperatursignal dem Steuergerät zugeführt wird. Für eine solche Temperaturmessung stehen an sich bekannte Messmethoden mit am Bauteil anliegenden Sensoren oder als berührungslose Messungen zur Verfügung.

In einer alternativen Ausführung oder gegebenenfalls zusätzlich, zum Beispiel zur Steigerung der Genauigkeit, kann die relevante Temperatur, insbesondere einer Abgasturbine, indirekt über das Lastprofil der Brennkraftmaschine vor einem Schaltvorgang berechnet werden. Für eine solche Berechnung können insbesondere die Drehzahl und/oder der Ladedruck und/oder die Einspritzmenge und/oder der Luftmassenstrom der Brennkraftmaschine verwendet werden.

Erfindungsgemäß wird bei der vorausschauenden Ermittlung des Verhaltens der Brennkraftmaschine unter Einbeziehung der aktuellen Temperatur zumindest eines Bauteils der Motorabgasanlage ein Drehmomentaufbau als Lastsprungantwort der Brennkraftmaschine vorausberechnet. Bevorzugt vorgesehen ist, dass eine gegenüber einem definiert vorgegebenen Bauteiltemperatur-Schwellwert geringere Bauteiltemperatur einen langsameren Drehmomentaufbau mit entsprechend geringerer Leistung der Brennkraftmaschine bedingt als dies bei Bauteiltemperaturen entsprechend der oder höher als die definiert vorgegebene Bauteil-Schwellentemperatur der Fall ist. Das heißt, dass eine relativ geringere Bauteiltemperatur einen langsameren Drehmomentaufbau mit entsprechend geringerer Leistung der Brennkraftmaschine bedingt. Erfindungsgemäß wird bei der Vorgabe einer Schaltschwelle und Entscheidung für einen Schaltvorgang dann berücksichtigt, wie schnell und mit welchem zeitlichen Verlauf bei der aktuellen Temperaturbedingung, insbesondere an einer Abgasturbine, die Brennkraftmaschine die erforderliche Leistung für die aktuelle Geschwindigkeitsanforderung des Fahrzeugs zur Verfügung stellt.

Weiter wird ein Steuergerät zur Durchführung eines der vorstehenden Verfahren beansprucht sowie ein Fahrzeug, insbesondere ein Nutzfahrzeug, unter Verwendung eines solchen Steuergerät.

Anhand einer Zeichnung wird die Erfindung weiter erläutert.

Es zeigen:
- Fig. 1: ein Flussdiagramm eines Verfahrens zur Steuerung eines Schaltvorgangs eines automatischen Schaltgetriebes bei einem Fahrzeug mit einer Brennkraftmaschine als Motor,
- Fig. 2: ein Lastsprungdiagramm für einen Drehmomentaufbau nach einem Schaltvorgang in Abhängigkeit einer Abgasturbinentemperatur.

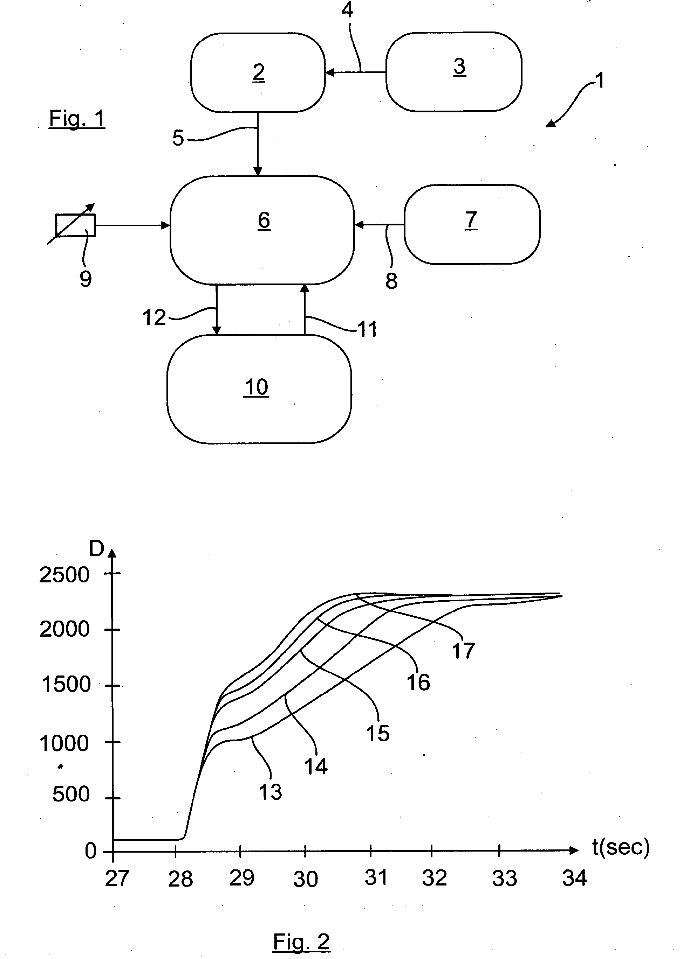

In Fig. 1 ist ein Flussdiagramm 1 für ein Verfahren zur Steuerung eines Schaltvorgangs eines automatischen Schaltgetriebes bei einem Fahrzeug mit einer Brennkraftmaschine als Motor dargestellt. Dazu wird im Block 2 fortlaufend der Istzustand des Motors ermittelt, wobei für die Berechnung erfasste Eingangsgrößen verwendet werden, wie sie schematisch mit dem Block 3 und dem Eingabepfeil 4 dargestellt ist. Als Eingangsgrößen werden dafür insbesondere die Kraftstoff- und Luftzufuhr, die Wassertemperatur und gegebenenfalls weitere erfasste Größen verwendet.

Unter Zugrundelegung der Ergebnisse aus dem Block 2 (Eingabepfeil 5) wird im Block 6 eine Vorausberechnung des Drehmomentaufbaus für mögliche Kennfeldpunkte eines möglichen Zielgangs durchgeführt. Zusätzlich zu den Werten für den Istzustand des Motors aus dem Block 2 werden dazu weitere Eingangsgrößen verwendet und berücksichtigt, wie dies schematisch mit Block 7 und dem Eingabepfeil 8 dargestellt ist. Block 7 steht dabei schematisch für die Eingangsgrößen Ladedruck, Drehzahl, Einspritzmenge und Luftmassenstrom, wobei diese Größen insbesondere zur indirekten, modellhaften Berechnung der Temperatur einer Abgasturbine eines Abgasturboladers herangezogen werden und diese Temperatur in der Vorausberechnung des Drehmomentaufbaus berücksichtigt wird. Alternativ oder zusätzlich kann eine solche Temperatur auch direkt mit wenigstens einem Temperatursensor 9 gemessen werden, dessen Messwert dem Block 6 für eine Berücksichtigung bei der Vorausberechnung zugeführt wird.

Block 10 steht schematisch für ein Getriebesteuergerät, das gegebenenfalls in einem Motorsteuergerät integriert ist, und in dem die Entscheidung getroffen wird, ob ein möglicher Schaltvorgang kraftstoffeffizient ist und durchgeführt werden soll oder unterbleibt. Dazu frägt das Getriebesteuergerät entsprechend Block 10 die Vorausberechnungsergebnisse aus Block 6 ab, wie mit dem Abfragepfeil 11 schematisch dargestellt. Entsprechend wird dann das Vorausberechnungsergebnis aus Block 6 an das Getriebesteuergerät von Block 10 ausgegeben, wie dies schematisch durch den Übermittlungspfeil 12 dargestellt ist.

In Fig. 2 ist beispielhaft die Sprungantwort eines Motors nach einem Schaltvorgang bezüglich eines Drehmomentaufbaus dargestellt. Dazu ist in einem Koordinatensystem nach oben qualitativ das Drehmoment und nach rechts der Zeitverlauf in Sekunden dargestellt:
Die eingezeichneten fünf Kurven entsprechen beispielhaft einer Lastsprungantwort eines Motors bei einem Schaltvorgang bei einer Drehzahl von 1200 Umdrehungen pro Minute. Ein thermisches Modell einer Abgasturbine ist im Motorsteuergerät integriert und greift auf Mess- bzw. Rechengrößen des Motorsteuergeräts zurück. Das Modell liefert eine Temperatur, mit deren Hilfe die Lastsprungantwort des Motors entsprechend Fig. 2 beschrieben/berechnet werden kann.

Im Diagramm nach Fig. 2 entspricht dabei die unterste Kurve 13 einer Temperatur der Abgasturbine von 140°C und weiter ansteigend die Kurve 14 einer Temperatur von 300°C, die Kurve 15 einer Temperatur von 400°C, die Kurve 16 einer Temperatur von 460°C und die oberste Kurve 17 einer Temperatur von 500°C.

Aus dem Diagramm ist deutlich ersichtlich, dass die Sprungantwort des Motors maßgeblich vom thermischen Zustand der Abgasturbine abhängt, wobei eine kältere Abgasturbine einen langsameren Drehmomentaufbau nach einem Schaltvorgang bedingt. Diese Abhängigkeit wird erfindungsgemäß ermittelt und bei der Entscheidung für einen möglichen Schaltvorgang berücksichtigt.

### Bezugszeichenliste

- 1: Flussdiagramm
- 2: Block
- 3: Block
- 4: Eingabepfeil
- 5: Eingabepfeil
- 6: Block
- 7: Block
- 8: Eingabepfeil
- 9: Temperatursensor
- 10: Block
- 11: Abfragepfeil
- 12: Übermittlungspfeil
- 13: unterste Kurve
- 14: Kurve
- 15: Kurve
- 16: Kurve
- 17: oberste Kurve

## Patentansprüche

1. Verfahren zur Steuerung eines Schaltvorgangs eines automatischen Schaltgetriebes bei einem Fahrzeug mit einer Brennkraftmaschine als Motor, wobei in einem Steuergerät eine Schaltstrategie vorgegeben ist, bei der auf der Basis von aktuell erfassten fahrdynamischen und/oder fahrzeugspezifischen und/oder motorspezifischen Ist-Werten fortlaufend vorausschauend das Verhalten des Motors nach einem eventuellen Schaltvorgang in einen Ziel-Gang ermittelt wird, wobei unter Einbeziehung dieser Vorschauergebnisse angepasste Schaltschwellen als Hochschaltschwellen oder Rückschaltschwellen ermittelt und vorgegeben werden, und wobei nach Überschreiten einer Schaltschwelle ein Steuerbefehl für einen entsprechenden automatischen Schaltvorgang ausgegeben wird, wobei bei der Vorgabe einer angepassten Schaltschwelle die aktuelle Temperatur zumindest eines Bauteils der Motorabgasanlage mit berücksichtigt wird, **dadurch gekennzeichnet, dass** bei der vorausschauenden Ermittlung des Verhaltens der Brennkraftmaschine (6) unter Einbeziehung der aktuellen Temperatur (7; 9) zumindest eines Bauteils der Motorabgasanlage ein Drehmomentaufbau als Lastsprungantwort (13 bis 17) der Brennkraftmaschine nach einem Schaltvorgang vorausberechnet wird, und
dass bei der Vorgabe einer Schaltschwelle (10) und einer Entscheidung für einen Schaltvorgang berücksichtigt wird, wie schnell und mit welchem zeitlichen Verlauf bei der aktuellen Temperaturbedingung die Brennkraftmaschine die erforderliche Leistung für die aktuelle Geschwindigkeitsanforderung des Fahrzeugs zur Verfügung stellt.

2. Verfahren nach Anspruch 1, **dadurch gekennzeichnet, dass** das mindestens eine Bauteil der Abgasanlage eine Abgasturbine eines Abgasturboladers und/oder ein Abgaskrümmer ist.

3. Verfahren nach Anspruch 1 oder Anspruch 2, **dadurch gekennzeichnet, dass** die Temperatur direkt mittels mindestens eines Temperatursensors (9) gemessen und ein aktuelles Temperatursignal dem Steuergerät zugeführt wird.

4. Verfahren nach einem der vorhergehenden Ansprüche, **dadurch gekennzeichnet, dass** die Temperatur indirekt über das Lastprofil der Brennkraftmaschine vor einem Schaltvorgang berechnet wird (7).

5. Verfahren nach Anspruch 4, **dadurch gekennzeichnet, dass** für die Berechnung die Drehzahl und/oder der Ladedruck und/oder die Einspritzmenge und/oder der Luftmassenstrom der Brennkraftmaschine verwendet wird oder werden.

6. Steuergerät zur Durchführung eines Verfahrens nach einem der Ansprüche 1 bis 5.

7. Fahrzeug, insbesondere Nutzfahrzeug, mit einem Steuergerät nach Anspruch 6.

## Claims

1. Method for controlling a shift operation of an automatic-shift transmission in a vehicle with a combustion machine as engine, wherein, in a control unit, a shift strategy is specified in which the behaviour of the engine after a possible shift process into a target gear ratio is continuously ascertained predictively on the basis of presently detected actual driving dynamics and/or vehicle-specific and/or engine-specific values, wherein shift thresholds adapted in a manner incorporating these predictive results are ascertained and specified as upshift thresholds or downshift thresholds, and wherein, after overshooting of a shift threshold, a control command for a corresponding automatic shift operation is output, wherein the present temperature of at least one component of the engine exhaust-gas system is jointly taken into consideration in the specification of an adapted shift threshold, **characterized in that**, in the predictive ascertainment of the behaviour of the combustion machine (6), a torque build-up as a load step response (13 to 17) of the combustion machine after a shift operation is pre-calculated in a manner incorporating the present temperature (7; 9) of at least one component of the engine exhaust-gas system, and
**in that**, in the specification of a shift threshold (10) and in a decision for a shift operation, it is taken into consideration how quickly, and with what profile with respect to time in the presence of the present temperature condition, the combustion machine provides the power required for the present speed demand of the vehicle.

2. Method according to Claim 1, **characterized in that** the at least one component of the exhaust-gas system is an exhaust-gas turbine of an exhaust-gas turbocharger and/or an exhaust-gas manifold.

3. Method according to Claim 1 or Claim 2, **characterized in that** the temperature is measured directly by means of at least one temperature sensor (9), and a present temperature signal is supplied to the control unit.

4. Method according to any one of the preceding claims, **characterized in that** the temperature is calculated (7) indirectly by way of the load profile of the combustion machine before a shift operation.

5. Method according to Claim 4, **characterized in that** the rotational speed and/or the charge pressure and/or the injection quantity and/or the air mass flow of the combustion machine is or are used for the calculation.

6. Control unit for carrying out a method according to any one of Claims 1 to 5.

7. Vehicle, in particular utility vehicle, having a control unit according to Claim 6.

## Revendications

1. Procédé de commande d'un changement de vitesse d'une boîte de vitesses automatique sur un véhicule doté d'un moteur à combustion interne comme moteur, une stratégie de changement de vitesse étant prédéfinie dans un appareil de commande dans laquelle, sur la base de valeurs réelles actuellement détectées et liées à la dynamique de conduite et/ou spécifiques au véhicule et/ou spécifiques au moteur, le comportement du moteur après un changement de vitesse possible vers une vitesse cible est déterminé en continu de manière prédictive, dans lequel, en tenant compte de ces résultats prédictifs, des seuils de changement de vitesse adaptés sont déterminés et prédéfinis comme seuils de passage à une vitesse supérieure ou comme seuils de rétrogradation, et dans lequel, après qu'un seuil de changement de vitesse a été passé, un ordre de commande pour un changement de vitesse automatique correspondant est délivré, la température actuelle d'au moins un composant du système de gaz d'échappement du moteur étant également prise en compte lorsqu'un seuil de changement de vitesse adapté est prédéfini, **caractérisé en ce que** lors de la détermination prédictive du comportement du moteur à combustion interne (6) en tenant compte de la température actuelle (7 ; 9) d'au moins un composant du système de gaz d'échappement du moteur, une montée en couple est précalculée comme réponse de saut de charge (13 à 17) du moteur à combustion interne après un changement de vitesse, et
**en ce que** lors de la prédéfinition d'un seuil de changement de vitesse (10) et d'une décision pour un changement de vitesse, on tient compte de la vitesse et du déroulement dans le temps à la condition de température actuelle avec lesquels le moteur à combustion interne fournit la puissance nécessaire pour la demande de vitesse actuelle du véhicule.

2. Procédé selon la revendication 1, **caractérisé en ce que** ledit au moins un composant du système de gaz d'échappement est une turbine à gaz d'échappement d'un turbocompresseur à gaz d'échappement et/ou un collecteur d'échappement.

3. Procédé selon la revendication 1 ou 2, **caractérisé en ce que** la température est mesurée directement au moyen d'au moins un capteur de température (9) et un signal de température actuel est acheminé à l'appareil de commande.

4. Procédé selon l'une quelconque des revendications précédentes, **caractérisé en ce que** la température est calculée (7) indirectement par l'intermédiaire du profil de charge du moteur à combustion interne avant un changement de vitesse.

5. Procédé selon la revendication 4, **caractérisé en ce que** pour le calcul, la vitesse de rotation et/ou la pression d'admission et/ou la quantité d'injection et/ou le débit massique d'air du moteur à combustion interne sont utilisés.

6. Appareil de commande permettant d'effectuer un procédé selon l'une quelconque des revendications 1 à 5.

7. Véhicule, en particulier véhicule utilitaire, comprenant un appareil de commande selon la revendication 6.
